## Europäisches Patentamt

(19) **European Patent Office**

**Office européen des brevets**

(11) Veröffentlichungsnummer: **0 222 126**
**B1**

(12) # EUROPÄISCHE PATENTSCHRIFT

(45) Veröffentlichungstag der Patentschrift:
10.05.89

(51) Int. Cl.⁴: **B60K 31/02**

(21) Anmeldenummer: **86113339.5**

(22) Anmeldetag: **27.09.86**

(54) **Elektrisches Stellglied für eine Kraftfahrzeuggeschwindigkeitssteuer- oder -regelaniage.**

(30) Priorität: **04.11.85 DE 3539058**

(43) Veröffentlichungstag der Anmeldung:
**20.05.87 Patentblatt 87/21**

(45) Bekanntmachung des Hinweises auf die Patenterteilung:
**10.05.89 Patentblatt 89/19**

(84) Benannte Vertragsstaaten:
**DE FR GB IT SE**

(56) Entgegenhaltungen:
**EP-A- 0 114 748**
**DE-A- 2 203 907**
**DE-A- 2 819 070**
**FR-A- 2 559 209**
**GB-A- 1 317 150**
**US-A- 3 338 225**

(73) Patentinhaber: **VDO Adolf Schindling AG,**
**Gräfstrasse 103, D-6000 Frankfurt/Main 90(DE)**

(72) Erfinder: **Oppermann, Rolf, Schützenstrasse 16,**
**D-6231 Schwalbach a. T.(DE)**
Erfinder: **Sausner, Andreas, Tucholskystrasse 26,**
**D-6000 Frankfurt am Main(DE)**

(74) Vertreter: **Klein, Thomas, Dipl.-Ing. (FH), Sodener**
**Strasse 9 Postfach 6140, D-6231 Schwalbach a. Ts.(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein elektrisches Stellglied für eine Kraftfahrzeuggeschwindigkeitssteuer- oder -regelanlage nach dem Oberbegriff des Anspruchs 1.

Derartige bekannte Stellglieder werden für eine Kraftfahrzeuggeschwindigkeitsregelung, bei der das Kraftfahrzeug durch selbsttätige Verstellung einer Drosselklappe eine vorgewählte Geschwindigkeit einhält oder für eine Kraftfahrzeuggeschwindigkeitssteuerung, bei der eine von einer Gaspedalstellung abhängige Steuerung der Kraftfahrzeuggeschwindigkeit erfolgt, eingesetzt.

Ein bekanntes elektrisches Stellglied hat einen Gleichstrommotor als elektromotorischen Antrieb, der von einem elektronischen Regler erzeugte Signale, deren Tastverhältnis moduliert wird, in eine mechanische Bewegung umsetzt. Um eine Drosselklappe bzw. ein Gasgestänge zu betätigen, ist der Elektromotor über ein Getriebe und eine elektromagnetische Schnelltrennkupplung mit einem Stellgliedabtrieb verbunden. Der Stellgliedabtrieb besteht im wesentlichen aus einem Abtriebsrad, welches die Drehbewegung in eine lineare Bewegung umformt, welche mit einem Seilzug auf das Gasgestänge zur Drosselklappenverstellung übertragen werden kann. Die Drosselklappe ist stets durch eine Feder belastet, welche aus Sicherheitsgründen die Drosselklappe in die Leerlauflage zu bewegen versucht. Das Öffnen der Drosselklappe durch das Stellglied muß also entgegen äußeren Rückstellkräften erfolgen, welche die Stellung des Stellglieds beeinflussen können. Deswegen ist bei bekannten Stellgliedern eine verhältnismäßig aufwendige Stellungsrückmeldung erforderlich, welche ein jeder Stellung des Stellglieds entsprechendes Stellungsrückmeldesignal erzeugt, welches in einem Stellungsregler mit einem Ausgangssignal des Geschwindigkeitsreglers bzw. der Geschwindigkeitssteuerung verglichen wird und über eine Motorendstufe den Motor des Stellglieds so lange ansteuert, bis dieser die von dem Geschwindigkeitsregler bzw. der Geschwindigkeitssteuerung befohlene Stellung einnimmt. – Die Schnelltrennkupplung hat die Aufgabe, den Kraftschluß zwischen dem Motor des Stellglieds und dem Gasgestänge im normalen Steuerungs- oder Regelungsbetrieb aufrechtzuerhalten, aber schnell zu trennen, wenn die Fahrzeugbremse oder -kupplung betätigt wird und von dem Bremslicht- oder Kupplungsschalter ein entsprechendes Signal abgegeben wird. Die Drosselklappe wird dann durch die an ihr angreifende Feder in die Leerlaufstellung zurückbewegt. In dem bekannten elektrischen Stellglied dient als Kupplungselement der elektromagnetischen Schnelltrennkupplung ein Ritzel des Getriebes, welches durch einen Klappanker mittels eines Elektromagneten quer zu seiner Längsachse geschwenkt werden kann. Wenn die Drosselklappe im Fahrbetrieb des Kraftfahrzeugs durch den Geschwindigkeitsregler bzw. die Geschwindigkeitssteuerung betätigt werden soll, schwenkt der Klappanker des Elektromagneten das Ritzel in Eingriff mit einem Stirnrad des Getriebes. Zum Lösen dieser Schnelltrennkupplung bei Unterbrechung des Stroms durch den Elektromagneten wird das Ritzel durch eine Rückholfeder außer Eingriff zu dem Stirnrad gezogen. – Bei diesem elektrischen Stellglied ist somit auch der Verschleiß nachteilig, der an dem Stirnrad bzw. dem Ritzel durch die Kupplungsvorgänge zwangsläufig erfolgt.

Aus der DE-A 2 203 907 ist ein elektrisches Stellglied der eingangs genannten Art bekannt. Dabei erfolgt die Übertragung der Bewegung des linear bewegbaren Elements mittels mehrerer Schwenkhebel, die entgegen einer Federkraft durch eine magnetische Schnelltrennkupplung miteinander kuppelbar sind.

Der Erfindung liegt daher die Aufgabe zugrunde, ein elektrisches Stellglied der eingangs genannten Gattung so auszubilden, daß die Schnelltrennkupplung bei zuverlässiger Funktion verschleißarm ist und daß die lineare Bewegung am Abtrieb des Stellglieds bei unterschiedlichen angreifenden äußeren Kräften stets proportional der elektrischen Größe ist, mit der der Elektromotor beaufschlagt wird, so daß eine aufwendige Stellungsrückmeldung mit einem Potentiometer und einem Stellungsregler entfallen kann.

Diese Aufgabe wird durch die Ausbildung des elektrischen Stellglieds mit den im Anspruch 1 angegebenen Merkmalen gelöst.

Durch den selbsthemmenden Eingriff der mit dem Getriebe drehbar verbundenen Gewindespindel in das verschiebbar gelagerte Element kann bei ausreichender Dimensionierung des Elektromotors erreicht werden, daß trotz der äußeren über den Seilzug an dem Stellglied angreifenden Rückstellkräfte die Verstellung des verschiebbaren Elements stets proportional der elektrischen Größe erfolgt, mit der der Motor gespeist wird. Insbesondere kann der Stellweg des verschiebbar gelagerten Elements und damit des Seilzugs sowie der Drosselklappe unabhängig von angreifenden Rückstellkräften proportional Pulslängen-modulierten Signalen sein, die von dem Geschwindigkeitsregler bzw. der Geschwindigkeitssteuerung erzeugt werden. – Solange der Topfmagnet, der das verschiebbar gelagerte Element bildet, in welches die Gewindespindel eingreift, durch einen Strom erregt ist, wird die linear bewegbare Ankerplatte zuverlässig angezogen und bei Verstellung des verschiebbaren Elements mitgenommen, wobei keine Relativbewegung zwischen der Ankerplatte und dem verschiebbaren Element bzw. dem Topfmagneten eintritt. Bei Unterbrechung des Stroms durch den Topfmagneten wird die Ankerplatte einfach von der zugewandten Oberfläche des Topfmagneten unter der Wirkung des Seilzugs bzw. der Feder-belasteten Drosselklappe entfernt. Es kann also praktisch kein Verschleiß der miteinander in Wirkverbindung tretenden Flächen des Topfmagneten und der Ankerplatte eintreten. Dies gilt auch, wenn das verschiebbar gelagerte Element bzw. der Topfmagnet im Verlaufe einer Anfahr- und Rücklaufsteuerung bis zum Kraftschluß mit der Ankerplatte auf diese zugefahren wird, um die Ankerplatte anschließend entsprechend der gewünschten Gaspedalstellung mit einer entgegengesetzten Bewegung mitnehmen zu können.

Damit die Ankerplatte eine definierte Endstellung einnimmt, in der sie durch die Anfahr- und Rücklaufsteuerung mit dem Topfmagneten zuverlässig in Wirkverbindung treten kann, ist die dem Topfmagneten abgewandte Seite der Ankerplatte bevorzugt konisch ausgebildet. Diese konisch geformte Seite zentriert in Verbindung mit einer entsprechenden konischen Ausnehmung eines Gehäuses die Ankerplatte selbsttätig, wenn diese durch die Rückholfeder mittels des Seilzuges in die Ausnehmung gezogen wird. Die mit dem Topfmagneten in Wirkverbindung getretene Seite steht dabei noch aus dem Gehäuse hervor. Durch die Ausbildung des Gehäuses mit einer eingelassenen Hülse und dem zylindrischen Teil der Ankerplatte gemäß Anspruch 3 wird erreicht, daß die Ankerplatte über den Verstellweg zuverlässig linear verschoben werden kann ohne eine genaue Ausrichtung der Hülse zu der Gewindespindel zu erfordern.

Durch die nach Anspruch 4 auf der dem Topfmagneten zugewandten Seite der Ankerplatte vorgesehene Scheibe aus amagnetischem Material, die statt dessen auch an der der Ankerplatte zugewandten Fläche des Topfmagneten angeordnet sein kann, wird ein zuverlässiges rasches Trennen der elektromagnetischen Schnelltrennkupplung bei Stromunterbrechung gewährleistet.

Ein in der Bewegungsbahn des Topfmagneten angeordneter Endschalter kann nach Anspruch 5 vorgesehen werden, um in den Endbereichen des Stellweges des Topfmagneten den Antrieb des Topfmagneten auszuschalten und damit eine axiale Kraftbeaufschlagung auf die Gehäusewände sowie in Reichwirkung auf die Gewindespindel sowie das Gewinde des Topfmagneten zu verhindern.

Die Erfindung wird im folgenden anhand einer Zeichnung mit zwei Figuren erläutert. Es zeigen:

Figur 1 den elektrischen Stellantrieb schematisch im Zusammenhang mit den wichtigsten Blöcken der Geschwindigkeitsregelanlage und
Figur 2 Einzelheiten der Ankerplatte und eines Gehäuseteils mit einer Hülse.

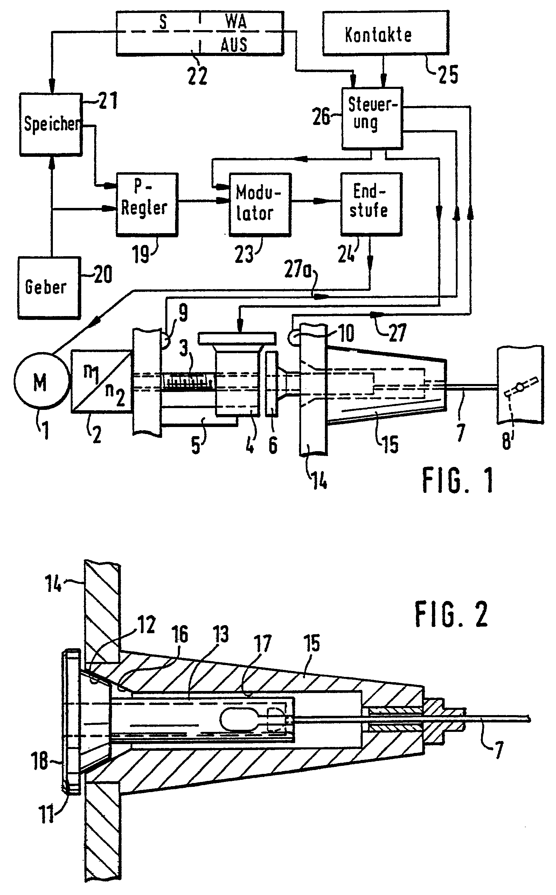

In Figur 1 umfaßt das elektrische Stellglied einen Elektromotor 1, der mit der Antriebsseite eines zweistufigen Getriebes 2 verbunden ist. Abtriebsseitig ist mit dem Getriebe eine Gewindespindel 3 verbunden, die in ein Gewinde eines verschiebbaren Topfmagneten 4 selbsthemmend eingreift. Der Topfmagnet ist durch ein Führungselement 5 gegen Verdrehen gesichert. Mit dem Topfmagneten kann eine Ankerplatte 6 in Wirkverbindung, d.h. in kraftschlüssige Verbindung gebracht werden, wenn der Topfmagnet erregt ist und auf die Ankerplatte zugefahren ist. Die Ankerplatte ist durch den Topfmagneten damit ebenfalls translatorisch bewegbar. Mit dem Topfmagneten steht ein Seilzug 7 in Verbindung, der zu einem Gasgestänge bzw. einer Drosselklappe 8 eines nicht dargestellten Verbrennungsmotors geführt ist.

In der Bewegungsbahn des Topfmagneten 4 sind an einem Gehäuse Endschalter 9 und 10 angeordnet, mit denen die Verschiebung des Topfmagneten in den jeweiligen Endbereichen gesteuert werden kann.

Einzelheiten der Ankerplatte und des zugehörigen Gehäuseteils gehen aus Figur 2 hervor. Die Ankerplatte ist auf einer dem Topfmagneten zugewandten Vorderseite 11 plan ausgebildet, während die abgewandte Rückseite 12 die Form eines sich nach außen verjüngenden Konus aufweist. In Verlängerung des Konus ragt von der Rückseite der Ankerplatte ein zylindrischer Teil 13 hervor, an dem ein Ende des Seilzugs 7 angebracht werden kann. In einer Gehäusewand 14 ist eine konische Hülse 15 eingelassen, die eine konische Ausnehmung 16 an einer Stirnseite aufweist, in welcher die konisch geformte Rückseite 12 der Ankerplatte zentriert werden kann. In Verlängerung dieser konischen Ausnehmung schließt sich in der Hülse eine zylindrische Bohrung 17 an, die einen so großen Durchmesser hat, daß der zylindrische Teil 13 der Ankerplatte darin lose beweglich ist.

Aus Figur 2 ist ferner eine auf der Vorderseite 11 der Ankerplatte angebrachte Scheibe 18 ersichtlich, die aus einem amagnetischem Material besteht, damit selbst bei anliegendem Topfmagneten ein rasches Lösen der Ankerplatte erfolgen kann, wenn die Erregung des Topfmagneten unterbrochen wird. Aus Figur 1 kann grob-schematisch entnommen werden, wie das beschriebene Stellglied mit einem elektronischen Geschwindigkeitsregler verbunden sein kann: Der Geschwindigkeitsregler umfaßt einen P-Regler 19, dessen Istwerteingang von einem Geschwindigkeitsgeber 20 beaufschlagt wird und dessen Sollwerteingang mit dem Ausgang eines Digitalspeichers 21 in Verbindung steht, in den ein Geschwindigkeitssollwert durch Betätigung einer Taste S eines Bedienschalters 22 einspeicherbar ist. Der Ausgang des P-Reglers führt über einen Pulslängenmodulator 23 und eine Motorendstufe 24, in der eine Leistungverstärkung der Pulslängen-modulierten Signale erfolgt, zu dem Motor 1 des Stellantriebs.

Der Motor 1 kann somit durch die Pulslängen-modulierte elektrische Größe, die von der Motorendstufe 24 abgegeben wird, gedreht werden, um in einer noch zu beschreibenden Weise eine Verstellung der Drosselklappe 8 zu bewirken, welche zur Aufrechterhaltung einer Geschwindigkeit des Fahrzeugs gleich dem Geschwindigkeitssollwert in dem Digitalspeicher 21 erforderlich ist.

Bei Start des Verbrennungsmotors des Kraftfahrzeugs ist jedoch zunächst die Ankerplatte 6 von dem Topfmagneten 4 der Schnelltrennkupplung gelöst und die Ankerplatte liegt zentriert mit ihrer konusförmigen Rückseite 12 in der konischen Ausnehmung 16, da sie durch den Seilzug unter der Wirkung der Feder-belasteten Drosselklappe zurückgezogen wird. Bei Betätigung des Zündschalters in dem schematischen Block 25 wird über einen Block 26 einer Anfahr- und Rücklaufsteuerung und den Pulslängenmodulator 23 zunächst ein Signal erzeugt, mit dem der Topfmagnet rasch in eine Endstellung gefahren wird, in der eine Wirkverbindung durch den magnetischen Kraftfluß zu der Ankerplatte eintreten kann. Diese Wirkverbindung erfolgt bei Erregung des Topfmagneten unter Umständen abhängig von einer weiteren Bedingung, beispielsweise dem Überschreiten einer bestimmten Fahrzeuggeschwindigkeit. Das Einfahren des Topfmagneten in die Leerlaufendstellung wird abgebremst, wenn ein Teil des Topfmagneten an den Endschalter 10 stößt, wodurch ein Endsignal auf einer Leitung 27 zu der Steuerung 26 auftritt. – Der Endschalter 9 kann bei entgegengesetzter Verstellung des Topfmagneten über eine Leitung 27a in ähnlicher Weise ein Abstoppen des Motors 10 bewirken. – Wenn der Topfmagnet, wie zuvor beschrieben, in Wirkstellung zu der Ankerplatte gefahren ist, besteht Betriebsbereitschaft des Stellglieds, welches jetzt durch einen Kraftschluß von dem Motor über das Getriebe, den Topfmagnet und die Ankerplatte den Seilzug nach Maßgabe der Sollgeschwindigkeit bzw. der Abweichung der Geschwindigkeit zu der Sollgeschwindigkeit anziehen kann.

Beim Bremsen oder – bei vorhandenem Schaltgetriebe – bei Betätigung der Kupplung wird ein Bremsschalter oder ein Kupplungsschalter betätigt, der den Strom durch den Topfmagneten 4 unterbricht. Unabhängig von der Stellung des Topfmagneten wird dann sofort die Ankerplatte unter der Federbelastung des Seilzugs in die Leerlaufstellung gezogen, in der sie in der konischen Ausnehmung 16 der Hülse 15 anliegt. Damit das Stellglied wieder zur Betätigung der Drosselklappe 8 betriebsbereit ist, wir der Topfmagnet, wiederum durch die Anfahr- und Rücklaufsteuerung 26 gesteuert, auf die Vorderseite 11 der Ankerplatte zugefahren, bis eine Kraftschlußverbindung hergestellt werden kann. Dazu erfolgt vorzugsweise eine Dauerbestromung des Motors 1, bis der Endschalter 10 das Erreichen der gewünschten Endlage durch den Topfmagneten meldet.

Von den Bedienschaltern 22 wird noch der Wiederaufnahmeschalter WA erwähnt, bei dessen Betätigung die letzte vor einem Brems- bzw. Kuppelvorgang gefahrene Geschwindigkeit selbsttätig wieder augenommen wird. Zuvor ist der Topfmagnet durch die Anfahr- und Rücklaufsteuerung in die wirksame Holsteuerung des Ankers zu fahren.

Eine Betätigung des Bedienschalters AUS bewirkt, daß der Topfmagnet mit der Ankerplatte elektromotorisch weich in die Leerlaufstellung gefahren wird.

Das elektrische Stellglied ist, wie an den beispielsweise genannten Betriebszuständen des Kraftfahrzeugs dargestellt wurde, geeignet, die üblicherweise in Fahrzeuggeschwindigkeitsregel- oder -steueranlagen auftretenden Erfordernisse betriebssicher zu erfüllen.

## Patentansprüche

1. Elektrisches Stellglied für eine Kraftfahrzeuggeschwindigkeitssteuer- oder -regelanlage, mit einem Elektromotor (1), mit einem von diesem antreibbaren Getriebe (2) und mit einer von dem Getriebe (2) drehbar antreibbaren Gewindespindel (3), die zum Wandeln der Drehbewegung des Getriebes (2) in eine lineare Bewegung in ein Gewinde eines verschiebbar gelagerten Elements eingreift, durch welches über eine elektromagnetische Schnelltrennkupplung die lineare Bewegung auf eine Drosselklappe (8) übertragbar ist, dadurch gekennzeichnet, daß das verschiebbar gelagerte Element als ein elektrisch erregbar Topfmagnet (4) ausgebildet ist, dem eine linear bewegbare Ankerplatte (6) gegenübersteht, an der ein mit der federbelasteten Drosselklappe (8) verbundener Seilzug (7) anbringbar ist und daß die Gewindespindel (3) selbsthemmend in das Gewinde des verschiebbar gelagerten Elements eingreift.

2. Elektrisches Stellglied nach Anspruch 1, dadurch gekennzeichnet, daß die Ankerplatte eine dem Topfmagnet abgewandte konische geformte Seite (12) aufweist, die in einer Endstellung der Ankerplatte in einer entsprechenden konischen Ausnehmung (16) eines Gehäuses zentrierbar ist.

3. Elektrisches Stellglied nach Anspruch 2, dadurch gekennzeichnet, daß in einer in das Gehäuse eingelassenen Hülse (15) die konische Ausnehmung (16) ausgeformt ist, in deren Verlängerung sich eine zylindrische Bohrung (17) anschließt, in der ein zylindrischer Teil (13) der Ankerplatte, der von deren konisch geformten Seite zur Anbringung des Seilzugs (7) herausragt, lose verschiebbar ist.

4. Elektromotorisches Stellglied nach einem der vorangehenden Ansprüche, dadurch gekennzeichnet, daß auf der dem Topfmagneten zugewandten Seite (11) der Ankerplatte eine Scheibe (18) aus amagnetischem Material angebracht ist.

5. Elektromotorisches Stellglied nach Anspruch 1 oder 2, dadurch gekennzeichnet, daß in der Bewegungsbahn des Topfmagneten (4) mindestens ein Endschalter (9, 10) zum Anschluß an eine Anfahr- und Rücklaufsteuerung des Elektromotors angeordnet ist.

## Revendications

1. Electomécanisme de manœuvre ou actionneur électrique pour dispositif de réglage ou de régulation de la vitesse d'un véhicule à moteur, comportant un moteur (1) électrique, une transmission (2) entraînée par ce moteur et une tige filetée (3) qui peut être entraînée en rotation par cette transmission (2) et qui, afin de convertir le mouvement de rotation de ladite transmission en un déplacement rectiligne, est en prise avec un taraudage d'un élément mobile grâce auquel ce déplacement rectiligne peut être transmis à un papillon (8) par l'intermédiaire d'un accouplement à dégagement rapide, électromécanisme caractérisé en ce que l'élément mobile a la conformation d'un électro-aimant (4) cuirassé pouvant être excité électriquement, vis-à-vis duquel se trouve une armature (6) en forme de plaquette déplaçable linéairement, à laquelle peut être fixé un câble (7) de traction relié au papillon (8), lequel est sollicité par un ressort, et en ce que la tige filetée (3) est en prise avec auto-blocage avec le taraudage de l'élément mobile.

2. Electromécanisme de manœuvre selon la revendication 1, caractérisé en ce que la plaquette-armature (6) comporte un côté (12) de forme conique, opposé à l'électro-aimant et qui, dans une position extrême de cette armature, peut se centrer dans un évidement conique (16) correspondant d'un boîtier.

3. Electromécanisme de manœuvre selon la re-

vendication 2, caractérisé en ce que l'évidement conique (16) est formé dans un manchon (15) encastré dans le boîtier et en ce qu'il s'y raccorde, en prolongement, un alésage cylindrique (17), dans lequel peut se déplacer librement une partie cylindrique (13) de l'armature, qui est destinée à la fixation du câble de traction et qui fait saillie du côté conique de la plaquette-armature.

4. Electromécanisme de manœuvre selon l'une des revendications précédentes, caractérisé en ce qu'un disque (18) en matière amagnétique est monté sur le côté (11) de la plaquette-armature tourné vers l'électro-aimant.

5. Electromécanisme de manœuvre selon la revendication 1 ou 2, caractérisé en ce qu'au moins un interrupteur (9, 10) de fin de course, destiné à être connecté au circuit de commande d'avance et de recul du moteur, est monté sur la trajectoire de l'électro-aimant (4).

## Claims

1. Electrical control element for a motor vehicle speed control or feedback control system, comprising an electric motor (1), a gear unit adapted to be driven by said motor, and a threaded spindle (3) which is adapted to be rotationally driven by the gear unit (2) and for the purpose of converting the rotary movement of the gear unit (2) into a linear movement engages with a screwthread on a slidably mounted member by which the linear movement can be transmitted to a throttle valve (8) by way of an electromagnetic quick release clutch, characterized in that the slidably mounted member is an electrically energizable pot magnet (4), opposite which is disposed a linearly movable armature plate (6) to which a cable (7) connected to the spring-loaded throttle valve (8) can be attached, and that the threaded spindle (3) engages self-lockingly with the screwthread of the slidably mounted member.

2. Electrical control element according to Claim 1, characterized in that the armature plate has a conically shaped side (12) which faces away from the pot magnet and which in an end position of the armature plate is adapted to be centered in a corresponding conical recess (16) in a casing.

3. Electrical control element according to Claim 2, characterized in that the conical recess (16) is formed in a sleeve (15) let into the casing and is extended by a cylindrical bore (17) in which a cylindrical part (13) of the armature plate, projecting from the conically shaped side of the latter for the attachment of the cable (7) is freely slidable.

4. Electromotive control element according to one of the preceding claims, characterized in that a disc (18) of nonmagnetic material is attached to the armature plate on the side (11) facing the pot magnet.

5. Electromotive control element according to Claim 1 or 2, characterized in that at least one limit switch (9, 10) is disposed in the path of movement of the pot magnet (4) for connection to a go and return control system for the electric motor.

FIG. 1

FIG. 2